# EUROPÄISCHE PATENTSCHRIFT

(11) **EP 2 259 602 B1**
(45) Veröffentlichungstag und Bekanntmachung des Hinweises auf die Patenterteilung: **09.05.2012**
(21) Anmeldenummer: 10177444.6
(22) Anmeldetag: 22.12.2000
(51) Int. Cl.: H04Q 3/00, H04M 3/487

(54) **Verfahren zum Aufbau einer Telekommunikationsverbindung**
Method for the establishment of a telecommunication link
Procédé pour établir une liaison de télécommunication

(30) Priorität: 08.01.2000 DE 10000498
(43) Veröffentlichungstag der Anmeldung: 08.12.2010
(62) Teilanmeldung aus: 07009264.8
(73) Patentinhaber: IPCom GmbH & Co. KG, 82049 Pullach (DE)
(72) Erfinder: Hasemann, Joerg-Michael, 27321, Emtinghausen (DE)
(74) Vertreter: Molnia, David

(56) Entgegenhaltungen:
- EP-A- 0 920 165
- JP-A- 6 121 043
- US-E- R E34 380

## Beschreibung

### Stand der Technik

Die Erfindung geht von einem Verfahren zum Aufbau einer Telekommunikationsverbindung nach der Gattung des Hauptanspruchs aus.

Verfahren zum Aufbau einer Telekommunikationsverbindung von einem ersten Telekommunikationsendgerät zu einem zweiten Telekommunikationsendgerät sind bereits bekannt. Die Telekommunikationsverbindung wird dabei mittels eines Telekommunikationsnetzes über Vermittlungsstellen realisiert, wobei eine solche Vermittlungsstelle eine Netzwerkeinheit des Telekommunikationsnetzes darstellt.

Aus der JP 6 121 043 ist ein Verfahren bekannt, bei dem Mitteilungen an ein erstes Kommunikationsendgerät während des Verbindungsaufbaus zu einem zweiten Kommunikationsendgerät übermittelt werden. Die Mitteilungen werden im Rahmen der noch im Aufbau befindlichen ersten Telekommunikationsverbindung übertragen.

### Vorteile der Erfindung

Das erfindungsgemäße Verfahren zum Aufbau einer Telekommunikationsverbindung mit den Merkmalen des Hauptanspruchs hat demgegenüber den Vorteil, daß während des Aufbaus der ersten Telekommunikationsverbindung von der Netzwerkeinheit mindestens eine Mitteilung an das erste Telekommunikationsendgerät versendet wird und daß die mindestens eine Mitteilung bei Empfang durch das erste Telekommunikationsendgerät an mindestens einer Wiedergabevorrichtung des ersten

Telekommunikationsendgerätes wiedergegeben wird. Auf diese Weise kann die Phase des Verbindungsaufbaus unabhängig vom Zustandekommen der ersten Telekommunikationsverbindung dazu genutzt werden, einem Benutzer des ersten Telekommunikationsendgerätes von Seiten des Telekommunikationsnetzes, beispielsweise durch einen Netzbetreiber, Informationen zukommen zu lassen. Dadurch kann die Wartezeit bis zum vollständigen Einrichten der ersten Telekommunikationsverbindung für den rufenden Teilnehmer, also den Benutzer des ersten Telekommunikationsendgerätes, überbrückt werden. Für einen Netzbetreiber ergibt sich der Vorteil, durch Übertragen von Werbemitteilungen zum ersten Telekommunikationsendgerät während des Aufbaus der ersten Telekommunikationsverbindung neue Einkommensquellen zu erschließen. Der Netzbetreiber könnte dabei die zum Aufbau der ersten Telekommunikationsverbindung erforderliche Zeit und weitere Zeit darüber hinaus als Werbezeit an beliebige Unternehmen vermieten.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß die Versendung der mindestens einen Mitteilung und deren Wiedergabe am ersten Telekommunikationsendgerät spätestens dann beendet wird, sobald der Aufbau der ersten Telekommunikationsverbindung abgeschlossen ist. Auf diese Weise kann die für den Aufbau der ersten Telekommunikationsverbindung erforderliche Zeit optimal zur Übertragung von Informationen von der Netzwerkeinheit zum ersten Telekommunikationsendgerät und zur Wiedergabe der Informationen am ersten Telekommunikationsendgerät ausgenutzt werden.

Eine optimale Ausnutzung der für den Aufbau der ersten Telekommunikationsverbindung zur Verfügung stehenden Zeit für die Übertragung und Wiedergabe der Informationen ergibt sich auch dann, wenn die Versendung der mindestens einen Mitteilung und deren Wiedergabe am ersten Telekommunikationsendgerät spätestens dann beendet wird, sobald nach einer vorgegebenen Zeit festgestellt wird, daß die erste Telekommunikationsverbindung noch nicht besteht.

Ein weiterer Vorteil besteht darin, daß vom ersten Telekommunikationsendgerät eine Verbindungsaufbauanforderungsnachricht an das Telekommunikationsnetz zum Aufbau der ersten Telekommunikationsverbindung versendet wird, daß der Empfang der Verbindungsaufbauanforderungsnachricht im Telekommunikationsnetz von der Netzwerkeinheit durch den Aufbau einer zweiten Telekommunikationsverbindung zwischen der Netzwerkeinheit und dem ersten Telekommunikationsendgerät beantwortet wird und daß die mindestens eine Mitteilung über die zweite Telekommunikationsverbindung von der Netzwerkeinheit zum ersten Telekommunikationsendgerät für eine Wiedergabe an der Wiedergabevorrichtung einmal oder wiederholt übertragen wird. Auf diese Weise werden für die Übertragung der Informationen von der Netzwerkeinheit zum ersten Telekommunikationsendgerät eigens Verbindungsressourcen in Form der zweiten Telekommunikationsverbindung reserviert, über die insbesondere mehrere verschiedene Mitteilungen während des Aufbaus der ersten Telekommunikationsverbindung von der Netzwerkeinheit zum ersten Telekommunikationsendgerät übertragen werden können. Der Aufbau der zweiten Telekommunikationsverbindung von der Netzwerkeinheit zum ersten Telekommunikationsendgerät erfordert keine besondere Auslegung des ersten Telekommunikationsendgerätes. Da die zweite Telekommunikationsverbindung wie auch die einzurichtende erste Telekommunikationsverbindung eine herkömmliche Telekommunikationsverbindung darstellt und die beiden Telekommunikationsverbindungen nicht gleichzeitig bestehen, da die zweite Telekommunikationsverbindung spätestens dann abgebrochen wird, sobald die erste Telekommunikationsverbindung vollständig eingerichtet ist, sind keine Änderungen am ersten Telekommunikationsendgerät gegenüber einem herkömmlichen Telekommunikationsendgerät erforderlich, um den Empfang der mindestens einen Mitteilung und deren Wiedergabe zu ermöglichen. Vom ersten Telekommunikationsendgerät werden somit keine besonderen Fähigkeiten gefordert, um die mindestens eine Mitteilung von der Netzwerkeinheit zu empfangen und wiederzugeben.

Ein weiterer Vorteil besteht darin, daß vom ersten Telekommunikationsendgerät eine Verbindungsaufbauanforderungsnachricht an das Telekommunikationsnetz zum Aufbau der ersten Telekommunikationsverbindung versendet wird, daß der Empfang der Verbindungsaufbauanforderungsnachricht im Telekommunikationsnetz von der Netzwerkeinheit durch Versenden einer Quittierungsnachricht an das erste Telekommunikationsendgerät bestätigt wird und daß mit der Quittierungsnachricht die mindestens eine Mitteilung von der Netzwerkeinheit zum ersten Telekommunikationsendgerät übertragen wird. Auf diese Weise ist es für die Übertragung der mindestens einen Mitteilung von der Netzwerkeinheit zum ersten Telekommunikationsendgerät nicht erforderlich, eine zweite Telekommunikationsverbindung aufzubauen und damit zusätzliche Verbindungsressourcen zu belegen. Eine Belegung von Verbindungsressourcen erfolgt dabei erst dann, wenn die erste Telekommunikationsverbindung vollständig eingerichtet ist. Somit ist die Übertragung der mindestens einen Mitteilung von der Netzwerkeinheit zum ersten Telekommunikationsendgerät besonders wirtschaftlich und kostengünstig.

Ein weiterer Vorteil besteht darin, daß frühestens mit der Verbindungsaufbauanforderungsnachricht eine Quittierungsempfangsfähigkeitsinformation vom ersten Telekommunikationsendgerät zum Telekommunikationsnetz übertragen wird, mit der das erste Telekommunikationsendgerät dem Telekommunikationsnetz mitteilt, daß es den Empfang der Quittierungsnachricht mit der mindestens einen Mitteilung während des Aufbaus der ersten Telekommunikationsverbindung unterstützt. Auf diese Weise kann verhindert werden, daß die Netzwerkeinheit die Quittierungsnachricht mit der mindestens einen Mitteilung an ein erstes Telekommunikationsendgerät versendet, das gar nicht in der Lage ist, die Quittierungsnachricht mit der mindestens einen Mitteilung zu empfangen oder zu detektieren und gegebenenfalls wiederzugeben. Ein unnötiges Absetzen der Quittierungsnachricht mit der mindestens einen Mitteilung von der Netzwerkeinheit zum ersten Telekommunikationsendgerät wird somit verhindert.

Ein weiterer Vorteil besteht darin, daß als Quittierungsnachricht die mindestens eine Mitteilung von der Netzwerkeinheit an das erste Telekommunikationsendgerät übertragen wird. Auf diese Weise kann auf die Übertragung einer von der mindestens einen Mitteilung unabhängigen eigenen Quittierungsnachricht verzichtet werden. Der Empfang der mindestens einen Mitteilung am ersten Telekommunikationsendgerät wird dann als entsprechende Quittierung der im Telekommunikationsnetz empfangenen Verbindungsaufbauanforderungsnachricht gewertet.

### Zeichnung

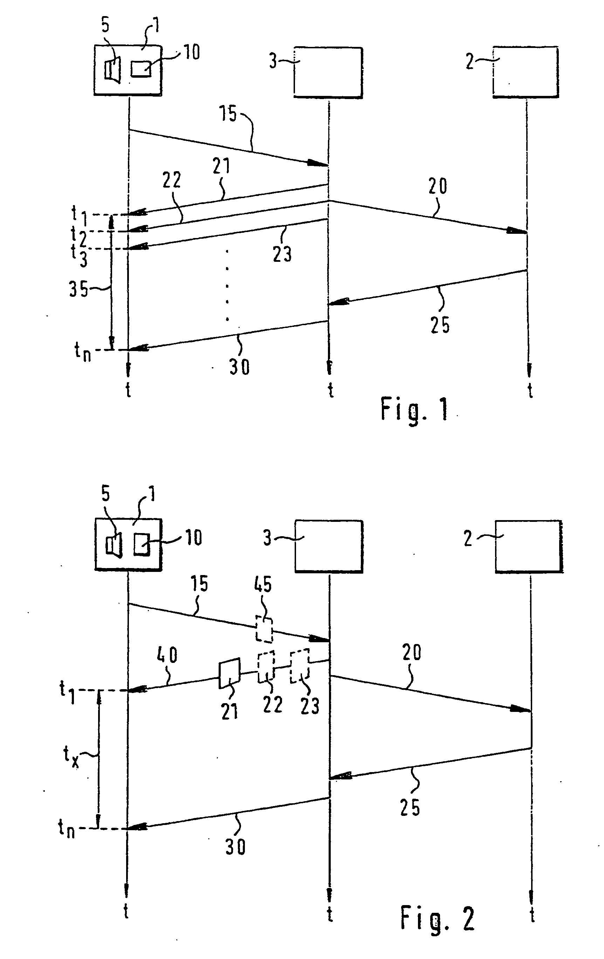

Ausführungsbeispiele der Erfindung sind in der Zeichnung dargestellt und in der nachfolgenden Beschreibung näher erläutert. Es zeigen Figur 1 ein erstes Ausführungsbeispiel für eine zeitliche Abfolge des erfindungsgemäßen Verfahrens und Figur 2 ein zweites Ausführungsbeispiel für eine zeitliche Abfolge des erfindungsgemäßen Verfahrens.

### Beschreibung der Ausführungsbeispiele

In Figur 1 kennzeichnet 1 ein erstes Telekommunikationsendgerät, das schnurgebunden, schnurlos oder drahtlos ausgebildet sein kann. Bei Ausbildung als schnurgebundenes Telekommunikationsendgerät kann das erste Telekommunikationsendgerät 1 dabei beispielsweise nach dem ISDN-Standard (Integrated Services Data Network) realisiert sein. Bei Ausbildung als Schnurlostelefon kann das Telekommunikationsendgerät 1 beispielsweise nach dem DECT-Standart (Digital European Cordless Telecommunications) realisiert sein. Bei Ausbildung als drahtloses Telekommunikationsendgerät kann das erste Telekommunikationsendgerät 1 beispielsweise als Mobiltelefon, insbesondere nach dem GSM-Standard (Global System for Mobile Communications) oder nach dem UMTS-Standard (Universal Mobile Telecommunications System), realisiert sein. Entsprechendes gilt für ein zweites Telekommunikationsendgerät 2, das ebenfalls als schnurgebundenes, als schnurloses oder als drahtloses Telekommunikationsendgerät ausgebildet sein kann. Das erste Telekommunikationsendgerät 1 umfaßt gemäß Figur 1 eine akustische Wiedergabevorrichtung 5 in Form eines Lautsprechers und eine optische Wiedergabevorrichtung 10 in Form einer Anzeige. Dabei kann es vorgesehen sein, daß auch nur die akustische Wiedergabevorrichtung 5 oder nur die optische Wiedergabevorrichtung 10 am ersten Telekommunikationsendgerät 1 vorgesehen sind. Das erste Telekommunikationsendgerät 1 und das zweite Tlekommunikationsendgerät 2 sind dabei als herkömmliche Telekommunikationsendgeräte ausgebildet und umfassen insbesondere jeweils eine Steuerung, um einen Meldungsaustausch zum Aufbau einer Telekommunikationsverbindung zu ermöglichen. Die Steuerung des ersten Telekommunikationsendgerätes 1 und die Steuerung des zweiten Telekommunikationsendgerätes 2 sind jedoch in Figur 1 aus Gründen der Übersichtlichkeit nicht dargestellt. Über ein Telekommunikationsnetz soll nun eine erste Telekommunikationsverbindung zwischen dem ersten Telekommunikationsendgerät 1 und dem zweiten Telekommunikationsendgerät 2 eingerichtet werden, wobei die erste Telekommunikationsverbindung vom ersten Telekommunikationsendgerät 1 aus aufgebaut werden soll. Der Verbindungsaufbau erfolgt dabei mittels einer Netzwerkeinheit 3 des Telekommunikationsnetzes. Im folgenden wird der zeitliche Ablauf für den Aufbau der ersten Telekommunikationsverbindung vom ersten Telekommunikationsendgerät 1 zum zweiten Telekommunikationsendgerät 2 beschrieben. Dabei wird zunächst vom ersten Telekommunikationsendgerät 1 eine Verbindungsaufbauanforderungsnachricht 15 an die Netzwerkeinheit 3 versendet, um die erste Telekommunikationsverbindung zwischen dem ersten Telekommmunikationsendgerät 1 und dem zweiten Telekommunikationsendgerät 2 anzufordern. Die Netzwerkeinheit 3 empfängt die Verbindungsaufbauanforderungsnachricht 15 und richtet zunächst eine zweite Telekommunikationsverbindung zwischen dem ersten Telekommunikationsendgerät 1 und der Netzwerkeinheit 3 ein. Über diese zweite Telekommunikationsverbindung versendet die Netzwerkeinheit 3 eine erste Mitteilung 21 an das erste Telekommunikationsendgerät 1, das die erste Mitteilung 21 zu einem ersten Zeitpunkt t1 empfängt und anschließend akustisch an der akustischen wiedergabevorrichtung 5 und/oder optisch an der optischen Wiedergabevorrichtung 10 wiedergibt. Handelt es sich bei der zweiten Telekommunikationsverbindung um eine Gesprächsverbindung, so wird die erste Mitteilung 21 als Gesprächsmitteilung von der Netzwerkeinheit 3 zum ersten Telekommunikationsendgerät übertragen und akustisch an der akustischen Wiedergabevorrichtung 5 wiedergegeben. Handelt es sich bei der zweiten Telekommunikationsverbindung um eine Datenverbindung, so wird die erste Mitteilung 21 als Datenmitteilung von der Netzwerkeinheit 3 zum ersten Telekommunikationsendgerät 1 übertragen und optisch an der optischen Wiedergabevorrichtung 10 wiedergegeben. Anschließend sendet die Netzwerkeinheit 3 eine zweite Mitteilung 22 an das erste Telekommunikationsendgerät 1, die beim ersten Telekommunikationsendgerät 1 zu einem zweiten Zeitpunkt t₂ empfangen und in der beschriebenen Weise optisch und/oder akustisch wiedergegeben wird. Anschließend versendet die Netzwerkeinheit 3 eine dritte Mitteilung 23 an das erste Telekommunikationsendgerät 1, das dort zu einem dritten Zeitpunkt t₃ empfangen und in der beschriebenen Weise optisch und/oder akustisch wiedergegeben wird. Anschließend können in der beschriebenen Weise weitere Mitteilungen von der Netzwerkeinheit 3 an das erste Telekommunikationsendgerät 1 versendet und dort wie beschrieben wiedergegeben werden. Bei den von der Netzwerkeinheit 3 an das erste Telekommunikationsendgerät 1 versendeten Mitteilungen 21, 22, 23, ... kann es sich um Informationen verschiedenster Art handeln, beispielsweise um Gebührenauskünfte eines Netzbetreibers des Telekommunikationsnetzes, um Werbemitteilungen, um Betriebshinweise des Ketzwerkbetreibers und dergleichen. Nach Empfang der Verbindungsaufbauanforderungsnachricht 15 versendet die Netzwerkeinheit 3 außerdem eine Verbindungsaufbaunachricht 20 an das zweite Telekommunikationsendgerät 2, um die erste Telekommunikationsverbindung aufzubauen. Das zweite Telekommunikationsendgerät 2 quittiert den Empfang der Verbindungsaufbaunachricht 20 durch Versenden einer Verbindungsaufbaubestätigung 25 an die Netzwerkeinheit 3. Die Netzwerkeinheit 3 versendete anschließend eine Antwortnachricht 30 an das erste Telekommunikationsendgerät 1, um den Verbindungsaufbau für die erste Telekommunikationsverbindung abzuschließen. Die Antwortnachricht 30 wird zu einem n-ten Zeitpunkt tₙ am ersten Telekommunikationsendgerät 1 empfangen, so daß von diesem Zeitpunkt an die erste Telekommunikationsverbindung zwischen dem ersten Telekommunikationsendgerät 1 und dem zweiten Telekommunikationsendgerät 2 über das Telekommunikationsnetz vollständig eingerichtet ist. Die Verbindungsaufbauanforderungsnachricht 15 wird auch als "Call Setup Request" bezeichnet. Die Verbindungsaufbaunachricht 20 wird auch als "Setup" bezeichnet. Die Verbindungsaufbaubestätigung 25 wird auch als "Call Confirmed/Connect" bezeichnet. Die Antwortnachricht 30 wird auch als "Answer" bezeichnet.

Die zweite Telekommunikationsverbindung ist mit Empfang der ersten Mitteilung 21 am ersten Telekommunikationsendgerät 1 zum ersten Zeitpunkt t₁ eingerichtet und besteht bis zum n-ten Zeitpunkt tₙ. Mit vollständiger Einrichtung der ersten Telekommunikationsverbindung wird die zweite Telekommunikationsverbindung abgebrochen, so daß die beiden Telekommunikationsverbindungen sich zeitlich nicht überlappen. Die Dauer der zweiten

Telekommunikationsverbindung ist dabei in Figur 1 durch das Bezugszeichen 35 gekennzeichnet. Die zweite Telekommunikationsverbindung zeichnet sich dadurch aus, daß zwischen dem ersten Telekommunikationsendgerät 1 und der Netzwerkeinheit 3 für die Dauer 35 der zweiten Telekommunikationsverbindung Verbindungsressourcen, beispielsweise in Form einer Gesprächs- oder Datenverbindung zwischen dem ersten Telekommunikationsendgerät 1 und der Netzwerkeinheit 3 im Telekommunikationsnetz reserviert sind.

Wenn die Netzwerkeinheit 3 vom Zeitpunkt des Empfangs der Verbindungsaufbauanforderungsnachricht 15 an nicht innerhalb einer vorgegebenen Zeit von beispielsweise 2 Min. die Verbindungsaufbaubestätigung 25 vom zweiten Telekommunikationsendgerät 2 empfängt, so bricht sie den Verbindungsaufbau für die erste Telekommunikationsverbindung ab. Außerdem teilt die Netzwerkeinheit 3 dem ersten Telekommunikationsendgerät 1 über die zweite Telekommunikationsverbindung durch ein akustisches Signal im Falle einer Gesprächsverbindung oder durch ein Datensignal im Falle einer Datenverbindung den Abbruch des Verbindungsaufbaus für die erste Telekommunikationsverbindung mit. Das akustische Signal wird dabei an der akustischen Wiedergabevorrichtung 5 wiedergegeben und das Datensignal wird an der optischen Wiedergabevorrichtung 10 wiedergegeben. Die von der Netzwerkeinheit 3 an das erste Telekommunikationsendgerät 1 versendete Mitteilung über den Abbruch des Verbindungsaufbaus für die erste Telekommunikationsverbindung kann auch unabhängig von der zweiten Telekommunikationsverbindung erfolgen. Anschließend beendet die Netzwerkeinheit 3 die bestehende zweite Telekommunikationsverbindung und die Versendung von Mitteilungen zum ersten Telekommunikationsendgerät 1. Bei den Mitteilungen 21, 22, 23, ... kann es sich um voneinander verschiedene Mitteilungen handeln. Zwei oder mehrere oder sämtliche Mitteilungen können jedoch auch gleich sein.

Die zweite Telekommunikationsverbindung kann auch schon vor dem vollständigen Einrichten der ersten Telekommunikationsverbindung von der Netzwerkeinheit 3 abgebrochen werden. Genauso kann die zweite Telekommunikationsverbindung 35 von der Netzwerkeinheit 3 auch schon vor Ablauf der vorgegebenen Zeit vom Empfang der Verbindungsaufbauanforderungsnachricht 15 an abgebrochen werden.

In Figur 2 ist eine zweite Ausführungsform des erfindungsgemäßen Verfahrens dargestellt, wobei in Figur 2 gleiche Bezugszeichen gleiche Elemente kennzeichnen wie in Figur 1. Figur 2 stellt dabei ebenfalls einen zeitlichen - Ablauf für den Aufbau der ersten Telekommunikationsverbindung vom ersten Telekommunikationsendgerät 1 über die Netzwerkeinheit 3 zum zweiten Telekommunikationsendgerät 2 dar. Der Aufbau der ersten Telekommunikationsverbindung vom ersten Telekommunikationsendgerät 1 zum zweiten Telekommunikationsendgerät 2 über die Netzwerkeinheit 3 erfolgt dabei durch den bereits bezüglich der ersten Ausführungsform gemäß Figur 1 beschriebenen Nachrichtenaustausch der Verbindungsaufauanforderungsnachricht 15, der Verbindungsaufbaunachricht 20, der Verbindungsaufbaubestätigung 25 und der Antwortnachricht 30.

Der einzige Unterschied zur ersten Ausführungsform gemäß Figur 1 besteht nun darin, daß die Netzwerkeinheit 3 nach Empfang der Verbindungsaufbauanforderungsnachricht 15 keine zweite Telekommunikationsverbindung zwischen dem ersten Telekommunikationsendgerät 1 und der Netzwerkeinheit 3 einrichtet, sondern lediglich eine Quittierungsnachricht 40 über den Empfang der Verbindungsaufbauanforderungsnachricht 15 an das erste Telekommunikationsendgerät 1 versendet. Mit der Quittierungsnachricht 40 versendet dabei die Netzwerkeinheit 3 die erste Mitteilung 21 an das erste Telekommunikationsendgerät 1. Die Quittierungsnachricht 40 mit der ersten Mitteilung 21 wird vom ersten Telekommunikationsendgerät 1 zum ersten Zeitpunkt t₁ empfangen Vom ersten Zeitpunkt t₁ bis zum n-ten Zeitpunkt tₙ ergibt sich eine Zeitspanne tₓ in der die erste Mitteilung 21 einmal oder wiederholt am Telekommunikationsendgerät 1 wiedergegeben wird. Wird die erste Mitteilung 21 als Gesprächssignal mit der Quittierungsnachricht 40 an das erste Telekommunikationsendgerät 1 versendet, so erfolgt eine akustische Wiedergabe an der akustischen Wiedergabevorrichtung 5 des ersten Telekommunikationsendgerätes 1. Wird die erste Mitteilung 21 als Datensignal mit der Quittierungsnachricht 40 an das erste Telekommunikationsendgerät 1 versendet, so erfolgt eine optische Wiedergabe an der optischen Wiedergabevorrichtung 10 des ersten Telekommunikationsendgerätes 1. Für die Übertragung der Quittierungsnachricht 40 mit der ersten Mitteilung 21 ist eine dauerhafte, d.h. für den Zeitraum tₓ, Belegung von Verbindungsressourcen bzw. die Einrichtung einer zweiten Telekommunikationsverbindung zwischen dem ersten Telekommunikationsendgerät 1 und der Netzwerkeinheit 3 nicht erforderlich.

Die Zeitspanne tₓ stellt die Zeit dar, in der die erste Mitteilung 21 einmal oder wiederholt an der akustischen Wiedergabevorrichtung 5 und/oder an der optischen Wiedergabevorrichtung 10 des ersten

Telekommunikationsendgerätes 1 wiedergegeben wird. Dabei kann es vorgesehen sein, daß das erste Telekommunikationsendgerät 1 ein Zeitglied umfaßt, das zum ersten Zeitpunkt t₁ aktiviert wird. Während dieses Zeitglied aktiviert ist, erfolgt eine einmalige oder wiederholte Wiedergabe der ersten Mitteilung 21 am ersten Telekommunikationsendgerät 1. Das Zeitglied läuft nach einer vorgegebenen Zeit ab, nach der die Wiedergabe der ersten Mitteilung 21 am ersten Telekommunikationsendgerät 1 abgebrochen wird. Die Wiedergabe der ersten Mitteilung 21 am ersten Telekommunikationsendgerät 1 wird jedoch spätestens und unabhängig von einer längeren Laufdauer des Zeitgliedes dann beendet, wenn am ersten Telekommunikationsendgerät 1 die Antwortnachricht 30 zum n-ten Zeitpunkt tₙ oder eine Mitteilung von der Netzwerkeinheit 3 empfangen wird, daß der Aufbau der ersten Telekommunikationsverbindung abgebrochen wurde. Läuft das Zeitglied jedoch vor dem Eintreffen der Antwortnachricht 30 oder einer Mitteilung der Netzwerkeinheit 3 über den erfolglosen Aufbau der ersten Telekommunikationsverbindung ab, so wird die Wiedergabe der ersten Mitteilung 21 auch schon mit dem Ablauf des Zeitgliedes beendet.

Es kann weiterhin vorgesehen sein, daß das erste Telekommunikationsendgerät 1 mit der Verbindungsaufbauanforderungsnachricht 15 eine Quittierungsempfangsfähigkeitsinformation 45 an die Netzwerkeinheit 3 überträgt, mit der das erste Telekommunikationsendgerät 1 dem Telekommunikationsnetz bzw. der Netzwerkeinheit 3 mitteilt, daß es den Empfang der Quittierungsnachricht 40 mit mindestens einer Mitteilung während des Aufbaus der ersten Telekommunikationsverbindung unterstützt. Die Quittierungsnachricht 40 mit der entsprechenden Mitteilung wird dann nur für den Fall von der Netzwerkeinheit 3 zum ersten Telekommunikationsendgerät übertragen, wenn die Netzwerkeinheit 3 zuvor die Quittierungsempfangsfähigkeitsinformation 45 empfangen hat. Empfängt die Netzwerkeinheit 3 keine solche Quittierungsempfangsfähigkeitsinformation 45, so versendet sie entweder keine Quittierungsnachricht 40 und keine Mitteilung an das erste Telekommunikationsendgerät 1, so daß es auch nicht zu einer Wiedergabe einer solchen Mitteilung am ersten Telekommunikationsendgerät 1 kommen kann oder sie baut gemäß der ersten Ausführungsform die zweite Telekommunikationsverbindung zur Übertragung einer oder mehrerer Mitteilungen an das erste Telekommunikationsendgerät 1 auf, wenn sie nicht innerhalb einer vorgegebenen Zeit nach Empfang der Verbindungsaufbauanforderungsnachricht 15 eine solche Quittierungsempfangsfähigkeitsinformation 45 empfängt bzw. detektiert.

Es kann weiterhin vorgesehen sein, mit Hilfe der Quittierungsnachricht 40 auch eine oder mehrere weitere Mitteilungen 22, 23 gemäß der gestrichelten Darstellung in Figur 2 von der Netzwerkeinheit 3 an das erste Telekommunikationsendgerät 1 zu übertragen.

Die gegebenenfalls mit der Verbindungsaufbauanforderungsnachricht 15 versendete Quittierungsempfangsfähigkeitsinformation 45 gibt dabei nur an, daß das erste Telekommunikationsendgerät 1 den Empfang der Quittierungsnachricht 40 mit mindestens einer solchen Mitteilung während des Aufbaus der ersten Telekommunikationsverbindung unterstützt.

Es kann weiterhin vorgesehen sein, daß als Quittierungsnachricht 40 die mindestens eine Mitteilung 21, 22, 23 von der Netzwerkeinheit 3 an das erste Telekommunikationsendgerät 1 übertragen wird, die Quittierungsnachricht 40 also ausschließlich aus einer oder mehreren solcher Mitteilungen besteht. Da eine solche Mitteilung nur dann von der Netzwerkeinheit 3 zum ersten Telekommunikationsendgerät 1 versendet wird, wenn die Netzwerkeinheit 3 die Verbindungsaufbauanforderungsnachricht 15 empfangen hat, kann die Versendung einer solchen Mitteilung bereits an sich als Quittierungsnachricht verwendet werden.

Die Quittierungsempfangsfähigkeitsinformation 45 wird auch als "Call Establishment Request" bezeichnet. Die Quittierungsnachricht 40 wird auch als "Call Establishment Confirm" bezeichnet.

Verbindungsressourcen werden beim zweiten Ausführungsbeispiel nach Figur 2 erst ab dem n-ten Zeitpunkt tₙ belegt, wenn die erste Telekommunikationsverbindung vollständig eingerichtet ist.

### Aspekte

1. Verfahren zum Aufbau einer ersten Telekommunikationsverbindung von einem ersten Telekommunikationsendgerät (1) zu einem zweiten Telekommunikationsendgerät (2) über eine Netzwerkeinheit (3) eines Telekommunikationsnetzes, dadurch gekennzeichnet, dass während des Aufbaus der ersten Telekommunikationsverbindung von der Netzwerkeinheit (3) mindestens eine Mitteilung (21, 22, 23) an das erste Telekommunikationsendgerät (1) versendet wird und dass die mindestens eine Mitteilung (21, 22, 23) bei Empfang durch das erste Telekommunikationsendgerät (1) an mindestens einer Wiedergabevorrichtung (5; 10) des ersten Telekommunikationsendgerätes (1) wiedergegeben wird.
2. Verfahren nach Aspekt 1, dadurch gekennzeichnet, dass die Versendung der mindestens einen Mitteilung (21, 22, 23) und deren Wiedergabe am ersten Telekommunikationsendgerät (1) spätestens dann beendet wird, sobald der Aufbau der ersten Telekommunikationsverbindung abgeschlossen ist.
3. Verfahren nach Aspekt 1 oder 2, dadurch gekennzeichnet, dass die Versendung der mindestens einen Mitteilung (21, 22, 23) und deren Wiedergabe am ersten Telekommunikationsendgerät (1) spätestens dann beendet wird, sobald nach einer vorgegebenen Zeit festgestellt wird, dass die erste Telekommunikationsverbindung noch nicht besteht.
4. Verfahren nach Aspekt 1, 2 oder 3, dadurch gekennzeichnet, dass vom ersten Telekommunikationsendgerät (1) eine Verbindungsaufbauanforderungsnachricht (15) an das Telekommunikationsnetz zum Aufbau der ersten Telekommunikationsverbindung versendet wird, dass der Empfang der Verbindungsaufbauanforderungsnachricht (15) im Telekommunikationsnetz von der Netzwerkeinheit (3) durch den Aufbau einer zweiten Telekommunikationsverbindung (35) zwischen der Netzwerkeinheit (3) und dem ersten Telekommunikationsendgerät (1) beantwortet wird und dass die mindestens eine Mitteilung (21, 22, 23) über die zweite Telekommunikationsverbindung (35) von der Netzwerkeinheit (3) zum ersten Telekommunikationsendgerät (1) für eine Wiedergabe an der Wiedergabevorrichtung (5, 10) einmal oder wiederholt übertragen wird.
5. Verfahren nach Aspekt 4, dadurch gekennzeichnet, dass die zweite Telekommunikationsverbindung (35) spätestens dann beendet wird, sobald die erste Telekommunikationsverbindung aufgebaut ist.
6. Verfahren nach Aspekt 1, 2 oder 3, dadurch gekennzeichnet, dass vom ersten Telekommunikationsendgerät (1) eine Verbindungsaufbauanforderungsnachricht (15) an das Telekommunikationsnetz zum Aufbau der ersten Telekommunikationsverbindung versendet wird, dass der Empfang der Verbindungsaufbauanforderungsnachricht (15) im Telekommunikationsnetz von der Netzwerkeinheit (3) durch Versenden einer Quittierungsnachricht (40) an das erste Telekommunikationsendgerät (1) bestätigt wird und dass mit der Quittierungsnachricht (40) die mindestens eine Mitteilung (21, 22, 23) von der Netzwerkeinheit (3) zum ersten Telekommunikationsendgerät (1) übertragen wird.
7. Verfahren nach Aspekt 6, dadurch gekennzeichnet, dass die mindestens eine Mitteilung (21, 22, 23) nach Empfang im ersten Telekommunikationsendgerät (1) für eine einmalige oder wiederholte Wiedergabe an der Wiedergabevorrichtung (5, 10) gespeichert wird.
8. Verfahren nach Aspekt 6 oder 7, dadurch gekennzeichnet, dass frühestens mit der Verbindungsaufbauanforderungsnachricht (15) eine Quittierungsempfangsfähigkeitsinformation (45) vom ersten Telekommunikationsendgerät (1) zum Telekommunikationsnetz übertragen wird, mit der das erste Telekommunikationsendgerät (1) dem Telekommunikationsnetz mitteilt, dass es den Empfang der Quittierungsnachricht (40) mit der mindestens einen Mitteilung (21, 22, 23) während des Aufbaus der ersten Telekommunikationsverbindung unterstützt.
9. Verfahren nach Aspekt 8, dadurch gekennzeichnet, dass die mindestens eine Mitteilung (21, 22, 23) nur dann von der Netzwerkeinheit (3) zum ersten Telekommunikationsendgerät (1) übertragen wird, wenn die Netzwerkeinheit (3) zuvor die Quittierungsempfangsfähigkeitsinformation (45) empfängt.
10. Verfahren nach einem der Aspekte 6 bis 9, dadurch gekennzeichnet, dass als Quittierungsnachricht (40) die mindestens eine Mitteilung (21, 22, 23) von der Netzwerkeinheit (3) an das erste Telekommunikationsendgerät (1) übertragen wird.
11. Verfahren nach Aspekt 8, dadurch gekennzeichnet, dass wenn die Netzwerkeinheit (3) nicht innerhalb einer vorgegebenen Zeit nach Empfang der Verbindungsaufbauanforderungsnachricht (15) vom ersten Telekommunikationsendgerät (1) eine Quittierungsempfangsfähigkeitsinformation (45) erhält, der Empfang der Verbindungsaufbauanforderungsnachricht (15) von der Netzwerkeinheit (3) durch den Aufbau einer zweiten Telekommunikationsverbindung (35) zwischen der Netzwerkeinheit (3) und dem ersten Telekommunikationsendgerät (1) beantwortet wird und die mindestens eine Mitteilung (21, 22, 23) über die zweite Telekommunikationsverbindung (35) von der Netzwerkeinheit (3) zum ersten Telekommunikationsendgerät (1) für eine Wiedergabe an der Wiedergabevorrichtung (5, 10) einmal oder wiederholt übertragen wird.

## Patentansprüche

1. Verfahren zum Aufbau einer ersten Telekommunikationsverbindung von einem ersten Telekommunikationsendgerät (1) zu einem zweiten Telekommunikationsendgerät (2) über eine Netzwerkeinheit (3) eines Telekommunikationsnetzes, wobei während des Aufbaus der ersten Telekommunikationsverbindung von der Netzwerkeinheit (3) mindestens eine Mitteilung (21, 22, 23) an das erste Telekommunikationsendgerät (1) versendet wird und wobei die mindestens eine Mitteilung (21, 22, 23) bei Empfang durch das erste Telekommunikationsendgerät (1) an mindestens einer Wiedergabevorrichtung (5, 10) des ersten Telekommunikationsendgerätes (1) wiedergegeben wird, **dadurch gekennzeichnet, dass** vom ersten Telekommunikationsendgerät (1) eine Verbindungsaufbauanforderungsnachricht (15) an das Telekommunikationsnetz zum Aufbau der ersten Telekommunikationsverbindung versendet wird, wobei der Empfang der Verbindungsaufbauanforderungsnachricht (15) im Telekommunikationsnetz von der Netzwerkeinheit (3) durch den Aufbau einer zweiten Telekommunikationsverbindung (35) zwischen der Netzwerkeinheit (3) und dem ersten Telekommunikationsendgerät (1) beantwortet wird und wobei die mindestens eine Mitteilung (21, 22, 23) über die zweite Telekommunikationsverbindung (35) von der Netzwerkeinheit (3) zum ersten Telekommunikationsendgerät (1) für eine einmalige oder wiederholte Wiedergabe an der Wiedergabevorrichtung (5, 10) einmal oder wiederholt übertragen wird.

2. Verfahren nach Anspruch 1, **dadurch gekennzeichnet, dass** die Versendung der mindestens einen Mitteilung (21, 22, 23) und deren einmalige oder wiederholte Wiedergabe am ersten Telekommunikationsendgerät (1) spätestens dann beendet wird, sobald der Aufbau der ersten Telekommunikationsverbindung abgeschlossen ist.

3. Verfahren nach Anspruch 1 oder 2, **dadurch gekennzeichnet, dass** die Versendung der mindestens einen Mitteilung (21, 22, 23) und deren einmalige oder wiederholte Wiedergabe am ersten Telekommunikationsendgerät (1) spätestens dann beendet wird, sobald nach einer vorgegebenen Zeit festgestellt wird, dass die erste Telekommunikationsverbindung noch nicht besteht.

4. Verfahren nach einem der Ansprüche 1 bis 3, **dadurch gekennzeichnet, dass** die zweite Telekommunikationsverbindung (35) spätestens dann beendet wird, sobald die erste Telekommunikationsverbindung aufgebaut ist.

5. Verfahren nach einem der Ansprüche 1 bis 4, wobei mit der zweiten Telekommunikationsverbindung Verbindungsressourcen zwischen dem ersten Telekommunikationsendgerät (1) und der Netzwerkeinheit (3) reserviert werden.

6. Verfahren nach einem der Ansprüche 1 bis 5, wobei der Verbindungsaufbau für die erste Telekommunikationsverbindung abgebrochen wird, sofern die Netzwerkeinheit (3) keine Verbindungsaufbaubestätigung (25) innerhalb einer vorgegebenen Zeit vom Empfang der Verbindungsaufbauanforderungsnachricht (15) empfängt.

7. Verfahren nach Anspruch 6, wobei die Netzwerkeinheit (3) dem ersten Telekommunikationsendgerät (1) den Abbruch des Verbindungsaufbaus für die erste Telekommunikationsverbindung mitteilt.

8. Verfahren nach Anspruch 7, wobei die Mitteilung über den Abbruch des Verbindungsaufbaus über die zweite Telekommunikationsverbindung (35) oder unabhängig von der zweiten Telekommunikationsverbindung (35)erfolgt.

9. Verfahren nach Anspruch 7 oder 8, wobei die Mitteilung über den Abbruch des Verbindungsaufbaus durch ein akustisches Signal im Falle einer Gesprächsverbindung oder durch ein Datensignal im Falle einer Datenverbindung mitgeteilt wird.

## Claims

1. Method for setting up a first telecommunication link from a first telecommunication terminal (1) to a second telecommunication terminal (2) via a network unit (3) of a telecommunication network, wherein during the setting up of the first telecommunication link from the network unit (3) at least one message (21, 22, 23) is sent to the first telecommunication terminal (1) and wherein the at least one message (21, 22, 23), when received by the first telecommunication terminal (1) is reproduced on at least one reproduction device (5, 10) of the first telecommunication terminal (1), **characterised in that** the first telecommunication terminal (1) sends a call setup request message (15) to the telecommunication network for setting up the first telecommunication link, wherein the reception of the call setup request message (15) in the telecommunication network is answered by the network unit (3) by setting up a second telecommunication link (35) between the network unit (3) and the first telecommunication terminal (1), and wherein the at least one message (21, 22, 23) is transmitted once or repeatedly via the second telecommunication link (35) from the network unit (3) to the first telecommunication terminal (1) for a single or repeated reproduction on the reproduction device (5, 10).

2. Method according to Claim 1, **characterised in that** the sending of the at least one message (21, 22, 23) and its single or repeated reproduction on the first telecommunication terminal (1) is ended at the latest as soon as the setting up of the first telecommunication link is concluded.

3. Method according to Claim 1 or 2, **characterised in that** the sending of the at least one message (21, 22, 23) and its single or repeated reproduction on the first telecommunication terminal (1) is ended at the latest as soon as it is found after a predetermined time that the first telecommunication link does not yet exist.

4. Method according to one of Claims 1 to 3, **characterised in that** the second telecommunication link (35) is ended at the latest as soon as the first telecommunication link has been set up.

5. Method according to one of Claims 1 to 4, wherein link resources are reserved between the first telecommunication terminal (1) and the network unit (3) by means of the second telecommunication link.

6. Method according to one of Claims 1 to 5, wherein the call set up for the first telecommunication link is terminated as soon as the network unit (3) does not receive a call set up acknowledgement (25) within a predetermined time after reception of the call set up request message (15).

7. Method according to Claim 6, wherein the network unit (3) informs the first telecommunication terminal (1) of the termination of the calls set up for the first telecommunication link.

8. Method according to Claim 7, wherein the information about the termination of the call set up is provided via the second telecommunication link (35) or independently of the second telecommunication link (35).

9. Method according to Claim 7 or 8, wherein the information about the termination of the call set up is provided by an audible signal in the case of a conversational link or by a data signal in the case of a data link.

## Revendications

1. Procédé destiné à établir une première liaison de télécommunication d'un premier terminal de télécommunication (1) à un second terminal de télécommunication (2) par l'intermédiaire d'une unité de réseau (3) d'un réseau de télécommunication, dans lequel, pendant l'établissement de la première liaison de télécommunication, au moins une communication (21, 22, 23) est envoyée par l'unité de réseau (3) au premier terminal de télécommunication (1) et dans lequel l'au moins une communication (21, 22, 23) est reproduite sur au moins un dispositif de reproduction (5, 10) du premier terminal de télécommunication (1) lors de la réception par le premier terminal de télécommunication (1), **caractérisé en ce qu'**un message de demande d'établissement de liaison (15) est envoyé par le premier terminal de télécommunication (1) au réseau de télécommunication pour l'établissement de la première liaison de télécommunication, dans lequel la réception du message de demande d'établissement de liaison (15) dans le réseau de télécommunication par l'unité de réseau (3) fait l'objet d'une réponse par l'établissement d'une seconde liaison de télécommunication (35) entre l'unité de réseau (3) et le premier terminal de télécommunication (1) et dans lequel l'au moins une communication (21, 22, 23) est transmise de manière unique ou répétée par l'intermédiaire de la seconde liaison de télécommunication (35) de l'unité de réseau (3) au premier terminal de télécommunication (1) pour une reproduction unique ou répétée sur le dispositif de reproduction (5, 10).

2. Procédé selon la revendication 1, **caractérisé en ce que** l'envoi de ladite au moins une communication (21, 22, 23) et sa reproduction unique ou répétée sur le premier terminal de télécommunication (1) s'achève au plus tard dès que l'établissement de la première liaison de télécommunication est interrompu.

3. Procédé selon la revendication 1 ou 2, **caractérisé en ce que** l'envoi de l'au moins une communication (21, 22, 23) et sa reproduction unique ou répétée sur le premier terminal de télécommunication (1) s'achève au plus tard au bout d'un temps prédéterminé si la première liaison de télécommunication n'a pas encore été établie.

4. Procédé selon l'une quelconque des revendications 1 à 3, **caractérisé en ce que** la seconde liaison de télécommunication (35) s'achève au plus tard dès que la première liaison de télécommunication est établie.

5. Procédé selon l'une quelconque des revendications 1 à 4, dans lequel des ressources de liaison sont réservées avec la seconde liaison de télécommunication entre le premier terminal de télécommunication (1) et l'unité de réseau (3).

6. Procédé selon l'une quelconque des revendications 1 à 5, dans lequel l'établissement d'une liaison pour la première liaison de télécommunication est abandonné si l'unité de réseau (3) n'a reçu aucune confirmation d'établissement de liaison (25) avant un temps prédéterminé par rapport à la réception du message de demande d'établissement de liaison (15).

7. Procédé selon la revendication 6, dans lequel l'unité de réseau (3) communique au terminal de télécommunication (1) l'abandon de l'établissement de liaison pour la première liaison de télécommunication.

8. Procédé selon la revendication 7, dans lequel la communication concernant l'abandon de l'établissement de liaison par l'intermédiaire de la seconde liaison de télécommunication (35) s'effectue par l'intermédiaire de la seconde liaison de télécommunication (35) ou indépendamment de la seconde liaison de télécommunication (35).

9. Procédé selon la revendication 7 ou 8, dans lequel la communication concernant l'abandon de l'établissement de liaison est communiquée par l'intermédiaire d'un signal acoustique dans le cas d'une liaison vocale ou par l'intermédiaire d'un signal de données dans le cas d'une liaison de données.
